# EUROPÄISCHE PATENTSCHRIFT

(11) **EP 0 985 107 B1**
(45) Veröffentlichungstag und Bekanntmachung des Hinweises auf die Patenterteilung: **16.01.2002**
(21) Anmeldenummer: 98932071.8
(22) Anmeldetag: 22.05.1998
(51) Int. Cl.: F16H 61/06

(54) **ERHÖHUNG DER SPONTANITÄT EINES AUTOMATGETRIEBES**
INCREASED AUTOMATIC GEAR BOX SPONTANEITY
ACCROISSEMENT DE LA SPONTANEITE D'UNE TRANSMISSION AUTOMATIQUE

(30) Priorität: 31.05.1997 DE 19722954
(43) Veröffentlichungstag der Anmeldung: 15.03.2000
(73) Patentinhaber: ZF FRIEDRICHSHAFEN AG, 88038 Friedrichshafen (DE)
(72) Erfinder: POPP, Christian, D-88079 Kressbronn (DE); TENBROCK, Friedrich, D-88085 Langenargen (DE); ROSI, Hansjörg, D-88074 Meckenbeuren (DE)
(86) Internationale Anmeldenummer: EP9803025
(87) Internationale Veröffentlichungsnummer: WO9854490

(56) Entgegenhaltungen:
- EP-A- 0 288 779
- EP-A- 0 341 631
- EP-A- 0 738 845
- DE-A- 4 240 621
- US-A- 5 285 880
- US-A- 5 505 100
- US-A- 5 624 351

## Beschreibung

Die Erfindung betrifft ein Verfahren zur Erhöhung der Spontanität bei einem Automatgetriebe, dessen Schaltungen als Überschneidungsschaltungen ausgeführt sind. Die Überschneidungsschaltung besteht hierbei aus drei Phasen. Während der ersten Phase wird über den Druckverlauf der ersten Kupplung der Verlauf einer Getriebeeingangsdrehzahl bestimmt, während der zweiten Phase übernimmt die zweite Kupplung die Last von der ersten Kupplung und während der dritten Phase wird die zweite Kupplung vollständig geschlossen.

Bei Automatgetrieben können die Schaltungen als Überschneidungsschaltungen, d. h., während eine erste Kupplung öffnet, schließt eine zweite Kupplung, ausgeführt sein. Der Druckverlauf der an der Schaltung beteiligten Kupplungen wird über elektromagnetische Stellglieder von einer elektronischen Getriebesteuerung bestimmt. Ein derartiges Steuerungs- und Regelverfahren ist z. B. aus der DE-A-42 40 621 bekannt.

Üblicherweise werden Schaltungen des Automatgetriebes ausgelöst, wenn ein von einem Fahrer vorgebbarer Leistungswunsch, z. B. Drosselklappenstellung, eine Hochschalt- bzw. Rückschaltkennlinie eines Schaltkennfeldes überschreitet. Neben diesen mittels Fahrpedal ausgelösten Schaltungen hat ein Fahrer auch die Möglichkeit, zu jedem beliebigen Zeitpunkt manuelle Schaltungen auszulösen. So zeigt z. B. die DE-A-43 11 886 eine Vorrichtung, durch die ein Fahrer mittels eines Wählhebels mit einer manuellen Gasse bzw. Schaltwippen am Lenkrad Schaltungen auslösen kann.

In der Praxis kann nunmehr folgendes Problem auftreten: Während eines Überholvorganges erkennt der Fahrer, daß er den Gegenverkehr passieren lassen muß. Als Reaktion hierauf wird er den Überholvorgang abbrechen, indem er das Fahrpedal freigibt. Hierdurch kann eine Hochschaltung ausgelöst werden. Erkennt nun der Fahrer während der Hochschaltung, daß die Gegenfahrbahn frei ist, so wird er den Überholvorgang erneut einleiten. Hierzu wird der Fahrer entweder das Fahrpedal betätigen oder über den Wählhebel eine Rückschaltung einleiten. Gemäß dem Stand der Technik wird das Automatgetriebe jedoch zuerst die Hochschaltung vollständig ausführen, gefolgt von einer Sperrzeit, und erst dann wird eine Rückschaltung begonnen.

Als Verbesserung beschreibt z. B. die EP-A-0 341 631 ein Verfahren zur Steuerung einer Überschneidungsschaltung, bei dem eine eingeleitete erste Schaltung nicht vollständig ausgeführt wird, wenn nach Ablauf einer Sperrzeit nach dem Schaltbefehl für die erste Schaltung ein Schaltbefehl für eine zweite Schaltung innerhalb einer Zeit erfolgt, in der die abschaltende Kupplung noch drehmomentführend ist und die zuschaltende Kupplung noch kein Drehmoment überträgt. Im Falle eines zweiten Schaltbefehls nach diesem Zeitpunkt, also zum Ende der ersten und während der zweiten Phase der Überschneidungsschaltung, wird zuerst die begonnene erste Schaltung vollständig ausgeführt, eine weitere Sperrzeit abgewartet und anschließend die Folgeschaltung durchgeführt.

Das Problem besteht somit darin, daß zwischen dem Fahrerwunsch bezüglich der Beschleunigung und der Reaktion des Automatgetriebes hierauf meistens ein großer zeitlicher Versatz besteht.

Die der Erfindung zugrunde liegende Aufgabe besteht insofern darin, die Spontanität eines Automatgetriebes weiter zu verbessern.

Die Aufgabe wird erfindungsgemäß gelöst, indem eine Hochschaltung von einer ersten in eine zweite Übersetzungsstufe nach einem Schaltbefehl unverzüglich ausgelöst wird und die eingeleitete Hochschaltung bei Vorliegen eines Abbruchkriteriums verzögerungsfrei abgebrochen und in die erste Übersetzungsstufe zurückgekehrt wird. Das Abbruchkriterium liegt dann vor, wenn vor Beginn der dritten Phase der Überschneidungsschaltung eine von einem Fahrer vorgebbare Anforderung zu einer Rückschaltung erkannt wird. Die erfindungsgemäße Lösung bietet den Vorteil, daß für den zuvor beschriebenen Fall aus der Praxis der starre Ablauf von Hochschaltung, Sperrzeit und anschließender Rückschaltung unterbrochen wird. Unnötige Schaltungen, z. B. eine Hochschaltung vom vierten in den fünften Gang, gefolgt von einer Rückschaltung vom fünften in den vierten Gang, werden unterbunden. Das Verhalten des Automatgetriebes ist enger an den Leistungswunsch des Fahrers gekoppelt, d. h., das Automatgetriebe wirkt spontaner.

In einer Ausgestaltung hierzu wird vorgeschlagen, daß das Abbruchkriterium während der zweiten Phase nur dann gesetzt wird, wenn eine mit Beginn der zweiten Phase aktivierte Zeitstufe einen Grenzwert noch nicht überschritten hat.

In einer weiteren Ausgestaltung der Erfindung wird vorgeschlagen, daß das Abbruchkriterium während der zweiten Phase nur dann gesetzt wird, wenn der aktuelle Getriebeeingangsdrehzahlwert noch nicht die Synchrondrehzahl der ersten Übersetzungsstufe unterschritten hat. Die beiden Ausgestaltungen bieten den Vorteil, daß ein Abbruch der Hochschaltung nur in einem Stadium zugelassen wird, während dem der Fahrer noch keine Reaktion des Automatgetriebes spürt. Mit anderen Worten: ein Abbruch der Hochschaltung wird dann nicht mehr zugelassen, wenn eine für einen Fahrer spürbare Reaktion, z. B. Veränderung der Fahrzeugbeschleunigung, auftritt.

In einer weiteren Ausgestaltung der Erfindung wird vorgeschlagen, daß bei einem Wechsel von Schub nach Zug bzw. vice versa während der Schaltung das Abbruchkriterium erst nach Ablauf einer Zeitstufe gesetzt wird. Diese Ausgestaltung trägt ebenfalls zum Schaltkomfort bei.

In den Zeichnungen ist ein bevorzugtes Ausführungsbeispiel dargestellt.

Es zeigen:
- Fig. 1: ein System-Schaubild;
- Fig. 2: eine Tabelle der Kupplungslogik;
- Fig. 3: ein erstes Ausführungsbeispiel und
- Fig. 4: ein zweites Ausführungsbeispiel.

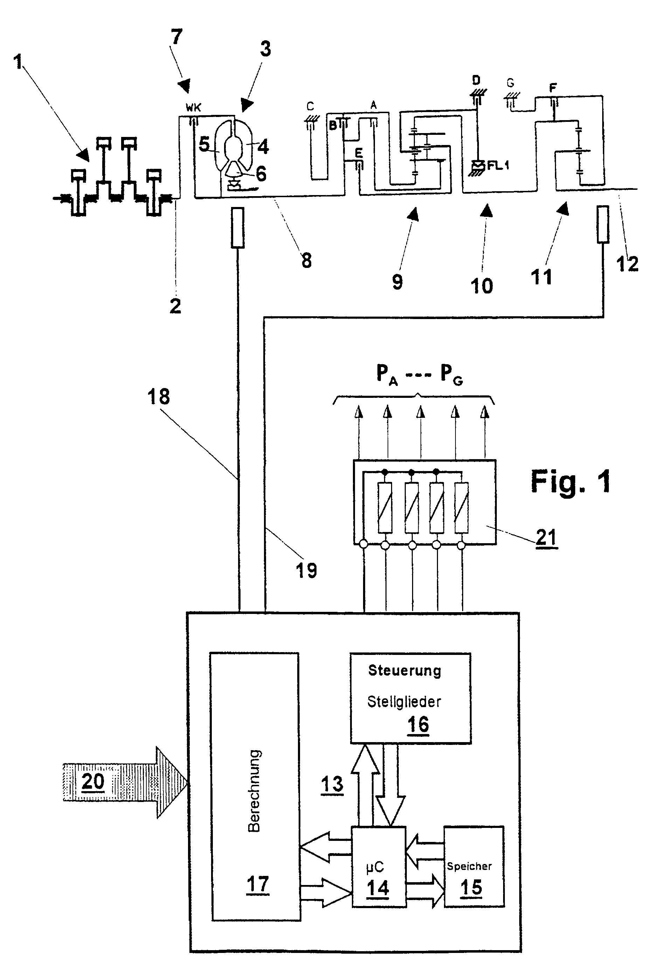

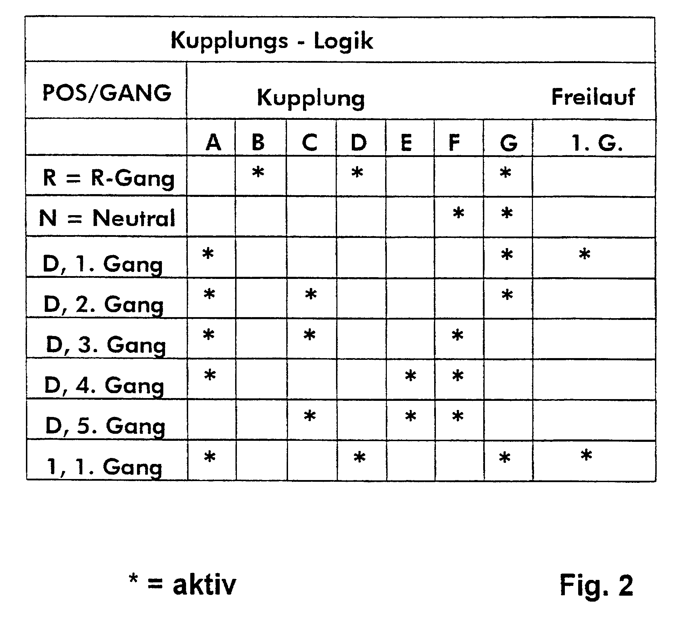

Fig. 1 zeigt ein System-Schaubild eines Automatgetriebes. Dieses besteht aus dem eigentlichen mechanischen Teil, einem hydrodynamischen Wandler 3, einem hydraulischen Steuergerät 21 und einer elektronischen Getriebesteuerung 13. Angetrieben wird das Automatgetriebe von einer Antriebseinheit 1, vorzugsweise Brennkraftmaschine, über eine Antriebswelle 2. Dieses ist mit dem Pumpenrad 4 des hydrodynamischen Wandlers 3 drehfest verbunden. Bekanntermaßen besteht der hydrodynamische Wandler 3 aus einem Pumpenrad 4, einem Turbinenrad 5 und einem Leitrad 6. Parallel zum hydrodynamischen Wandler 3 ist eine Wandlerkupplung 7 angeordnet. Die Wandlerkupplung 7 und das Turbinenrad 5 führen auf eine Turbinenwelle 8. Bei betätigter Wandlerkupplung 7 hat die Turbinenwelle 8 die gleiche Drehzahl wie die Antriebswelle 2. Der mechanische Teil des Automatgetriebes besteht aus Kupplungen und Bremsen A bis G, einem Freilauf 10 (FL1), einem Ravigneaux-Satz 9 und einem nachgeordneten Planetenradsatz 11. Der Abtrieb geschieht über eine Getriebeausgangswelle 12. Diese führt auf ein nicht dargestelltes Differential, welches über zwei Achshalbwellen die Antriebsräder eines nicht dargestellten Fahrzeuges antreiben. Über eine entsprechende Kupplungs-/Brems-Kombination wird eine Gangstufe festgelegt. Die Zuordnung der Kupplungslogik zur Gangstufe ist aus der Fig. 2 ersichtlich. So wird z. B. bei einer Rückschaltung aus dem vierten in den dritten Gang die Bremse C geschlossen und die Kupplung E deaktiviert. Wie weiter aus der Tabelle 2 ersichtlich ist, sind die Schaltungen von der zweiten bis zur fünften Übersetzungsstufe jeweils als Überschneidungsschaltungen ausgeführt. Da der mechanische Teil für das weitere Verständnis der Erfindung nicht relevant ist, wird auf eine detaillierte Beschreibung verzichtet.

Die elektronische Getriebesteuerung 13 wählt in Abhängigkeit der Eingangsgrößen 18 bis 20 eine entprechende Fahrstufe aus. Über das hydraulische Steuergerät 21, in dem sich elektro-magnetische Stellglieder befinden, aktiviert sodann die elektronische Getriebesteuerung 13 eine entsprechende Kupplungs-/Brems-Kombination. Während der Schaltübergänge bestimmt die elektronische Getriebesteuerung 13 den Druckverlauf der an der Schaltung beteiligten Kupplungen/Bremsen. Von der elektronischen Getriebesteuerung 13 sind in stark vereinfachter Form als Blöcke dargestellt: Micro-Controller 14, Speicher 15, Funktionsblock Steuerung Stellglieder 16 und Funktionsblock Berechnung 17. Im Speicher 15 sind die getrieberelevanten Daten abgelegt. Getrieberelevante Daten sind z. B. Programme und fahrzeugspezifische Kennwerte als auch Diagnosedaten. Üblicherweise ist der Speicher 15 als EPROM, EEPROM oder als gepufferter RAM ausgeführt. Im Funktionsblock Berechnung 17 werden die für einen Schaltungsverlauf relevanten Daten berechnet. Der Funktionsblock Steuerung Stellglieder 16 dient der Ansteuerung der sich im hydraulischen Steuergerät 21 befindenden Stellglieder.
Die elektronische Getriebesteuerung 13 erhält Eingangsgrößen 20. Eingangsgrößen 20 sind z. B. eine den Leistungswunsch des Fahrers repräsentierende Größe, wie etwa die Fahrpedal-/Drosselklappenstellung oder manuell angeforderte Schaltungen, das Signal des von der Brennkraftmaschine abgegebenen Moments, die Drehzahl bzw. Temperatur der Brennkraftmaschine usw. Üblicherweise werden die Brennkraftmaschinen-spezifischen Daten von einem Motorsteuergerät bereitgestellt. Dieses ist in Fig. 1 nicht dargestellt. Als weitere Eingangsgrößen erhält die elektronische Getriebesteuerung 13 die Drehzahl der Turbinenwelle 18 und der Getriebeausgangswelle 19.

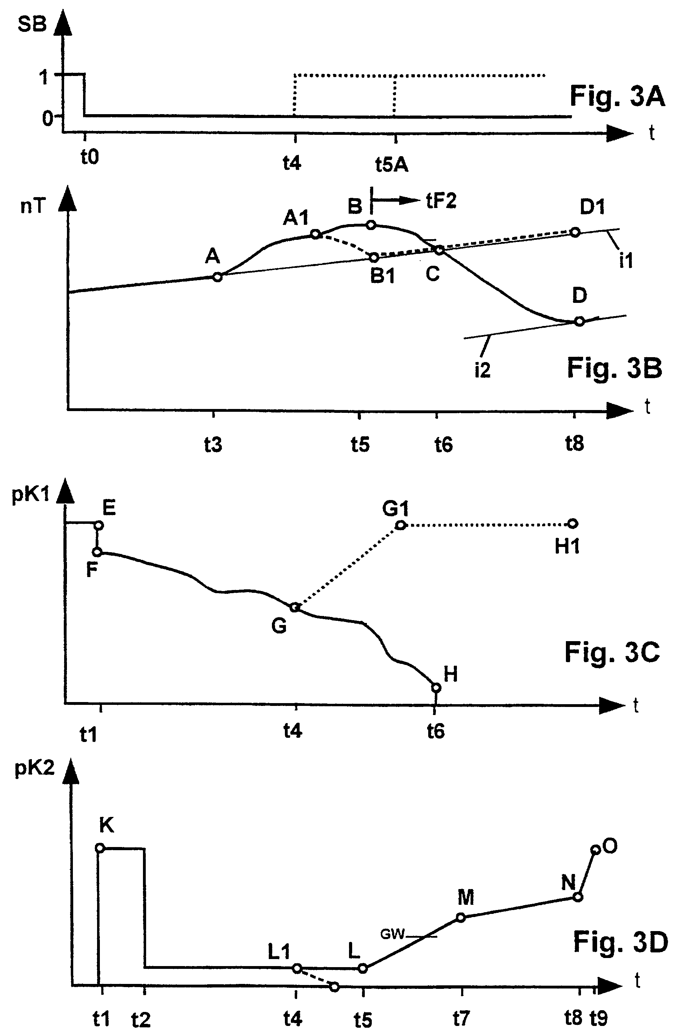

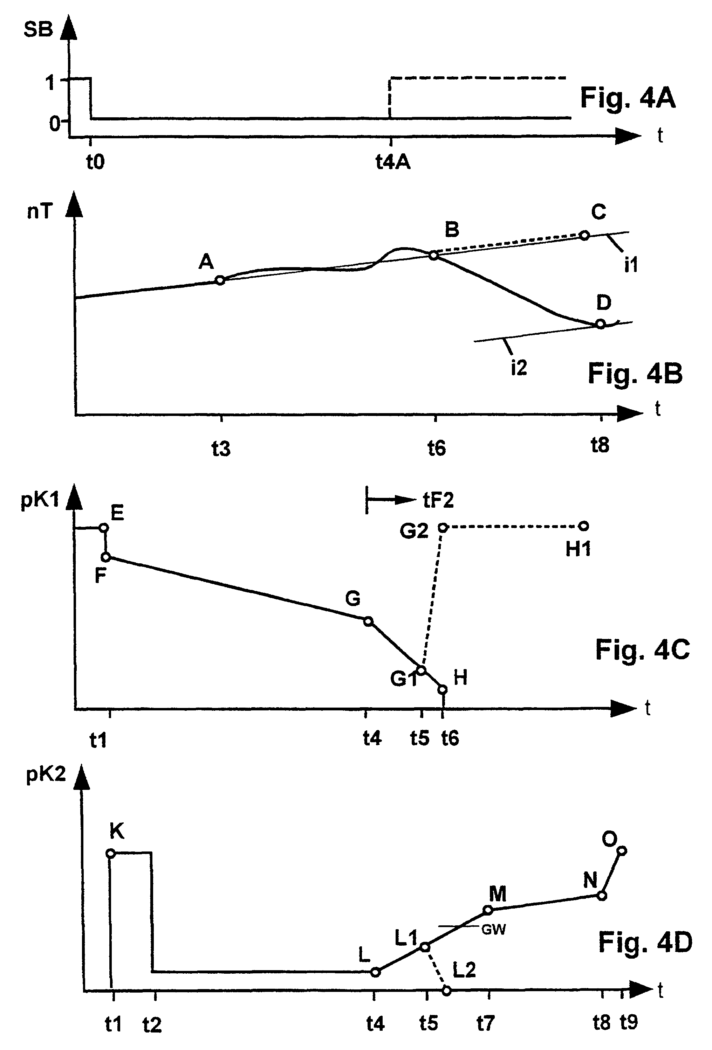

Den Fig. 3 und 4 liegt der Fall zugrunde, daß ein Fahrer während eines Überholvorganges erkennt, daß er den Gegenverkehr passieren lassen muß. Der Fahrer wird sodann seinen Überholvorgang abbrechen, indem er das Fahrpedal freigibt. Es wird davon ausgegangen, daß hierdurch eine Hochschaltkennlinie überschritten wird und das Automatgetriebe eine Hochschaltung im Schub beginnt. Während der Hochschaltung erkennt der Fahrer, daß die Gegenfahrbahn nunmehr frei ist und leitet den Überholvorgang erneut ein, indem er entweder das Fahrpedal betätigt oder indem er eine manuelle Rückschaltung anfordert. Es wird davon ausgegangen, daß in beiden Fällen eine Rückschaltkennlinie überschritten wird.

In Fig. 3 ist ein erstes Ausführungsbeispiel dargestellt. Diesem ist eine Hochschaltung als Überschneidungsschaltung zugrunde gelegt, wie sie z. B. aus der DE-A-42 40 621 bekannt ist. In einer ersten Phase der Überschneidungsschaltung wird hierbei eine Drehzahlüberhöhung der Getriebeeingangsdrehzahl eingeregelt. Die zweite Phase entspricht der Lastübernahme. Diese wird daran erkannt, wenn die Drehzahlüberhöhung sich verkleinert. In einer dritten Phase wird dann die zweite Kupplung vollständig geschlossen.

Die Fig. 3 besteht aus den Teil-Fig. 3A bis 3D. Hierbei zeigen jeweils über der Zeit: Fig. 3A den Schaltbefehl SB, Fig. 3B den Verlauf der Getriebeeingangsdrehzahl nT, Fig. 3C den Druckverlauf der ersten Kupplung pK1 und Fig. 3D den Druckverlauf der zweiten Kupplung pK2. Dargestellt sind in den Fig. 3A bis 3D jeweils zwei Beispiele. Ein erstes Beispiel zeigt den Schaltungsablauf gemäß dem Stand der Technik. Dieser ist als durchgezogene Linie ausgeführt. Das zweite Beispiel zeigt eine Lösung gemäß der Erfindung, als gestrichelte Linie ausgeführt.

### Zum ersten Beispiel:

Der Schaltungsablauf gemäß dem Stand der Technik entspricht in Fig. 3B dem Kurvenzug mit den Punkten A, B, C und D. In Fig. 3C dem Kurvenzug mit den Punkten E, F, G und H. In Fig. 3D dem Kurvenzug mit den Punkten K, L, M, N und O. Zum Zeitpunkt t0 gibt die elektronische Getriebesteuerung 13 den Schaltbefehl SB aus. In Fig. 3A ändert sich hierdurch der Signalverlauf von Eins nach Null. Zum Zeitpunkt t1 wird das Druckniveau der ersten Kupplung K1 von einem ersten auf ein zweites Druckniveau verringert. Dies entspricht den Punkten E und F. Danach beginnt für die erste Kupplung K1 die erste Phase. Während dieser wird der Druckverlauf so geregelt, daß die Getriebeeingangsdrehzahl nT sich vergrößert. Dies tritt zum Zeitpunkt t3, Punkt A, ein. Diese Drehzahlüberhöhung wird hierbei als Sollwert für einen Regelkreis vorgegeben. Drehzahlüberhöhung bedeutet, daß die Getriebeeingangsdrehzahl nT einen höheren Drehzahlwert erreicht, als wie sich aus der ersten Übersetzungsstufe i1 ergeben würde. Ebenfalls zum Zeitpunkt t1 wird die zweite Kupplung K2 bis zum Zeitpunkt t2 mit einem Schnellfülldruck beaufschlagt. Das Druckniveau entspricht hierbei dem Wert des Punktes K. Danach folgt für die zweite Kupplung K2 eine Füllausgleichsphase bis zum Zeitpunkt t5. Es wird davon ausgegangen, daß zum Zeitpunkt t4 die elektronische Getriebesteuerung 13 eine Rückschaltungsanforderung erkennt. Gemäß dem Stand der Technik wird das Automatgetriebe jedoch zuerst die Hochschaltung beenden, d. h. zum Zeitpunkt t5 beginnt im Punkt L für die zweite Kupplung K2 eine erste und zweite Druckrampe bis zum Zeitpunkt t7 bzw. t8, entsprechend den Punkten M und N. Während der ersten Druckrampe beginnt die zweite Kupplung K2 die Last von der ersten Kupplung K1 zu übernehmen. Dies wird daran erkannt, daß die Getriebeeingangsdrehzahl nT sich in Richtung des Punktes C, dem Synchronpunkt der ersten Übersetzungstufe i1, verändert. Zum Zeitpunkt t6 hat die Getriebeeingangsdrehzahl nT die Synchrondrehzahl der ersten Übersetzungsstufe i1 wieder erreicht, so daß die erste Kupplung K1 vollständig abgeschaltet wird. Über die Druckrampe entsprechend M und N, Zeitraum t7 bis t8, wird der weitere Verlauf der Getriebeeingangsdrehzahl nT bestimmt. Der Zeitraum t5 bis t8 entspricht der zweiten Phase der Überschneidungsschaltung. Im Zeitraum t8 bis t9 wird die zweite Kupplung K2 auf ein Druckniveau außerhalb der Schaltung geführt, dies entspricht dem Druckniveau des Punktes 0. Die Hochschaltung ist bei t9 beendet. Die dritte Phase entspricht somit dem Zeitraum t8 bis t9.

### Zum zweiten Beispiel:

Die erfindungsgemäße Lösung zeigt in Fig. 3B den Kurvenverlauf mit den Punkten A, A1, B1, C und D1. In Fig. 3C den Kurvenverlauf mit den Punkten E, F, G, G1 und H1. In Fig. 3D den Kurvenverlauf mit den Punkten K und L1. Der Schaltungsablauf bis zum Zeitpunkt t4 erfolgt wie zuvor beschrieben. Zum Zeitpunkt t4 wird davon ausgegangen, daß eine von einem Fahrer vorgebbare Rückschaltungsanforderung vorliegt. Da dies innerhalb der ersten Phase geschieht, wird die elektronische Getriebesteuerung sodann zum Zeitpunkt t4 das Abbruchkriterium setzen und den Rückschaltbefehl ausgeben. In Fig. 3A ändert sich dadurch der Signalpegel SB von Null nach Eins. Als Folge hiervon wird das Druckniveau der ersten Kupplung vom aktuellen Druckniveau, das entspricht dem Punkt G, über eine Rampenfunktion auf das erste Druckniveau, dies entspricht dem Wert des Punktes G1, erhöht. Gleichzeitig wird das Druckniveau der zweiten Kupplung K2 vom aktuellen Druckniveau, also dem Fülldruckniveau entsprechend dem Punkt L1, über eine Rampenfunktion auf Null reduziert. Hierdurch ändert sich die Getriebeeingangsdrehzahl nT im Punkt A1 in Richtung des Punktes B1. Der Drehzahlwert des Punktes B1 entspricht hierbei der Synchrondrehzahl der ersten Übersetzungsstufe i1. Danach wird sich die Getriebeeingangsdrehzahl nT bis zum Zeitpunkt t8 nur noch gemäß der ersten Übersetzungsstufe verändern. Das Druckniveau der ersten Kupplung pK1 wird entsprechend dem Druckniveau des Punktes G1 konstant gehalten.

Erfolgt die Anforderung zu einer Rückschaltung während der zweiten Phase, dies entspricht dem Zeitraum t5 bis t8, so wird das Abbruchkriterium nur dann gesetzt, wenn eine mit Beginn der zweiten Phase aktivierte Zeitstufe einen Grenzwert noch nicht überschritten hat. Diese Zeitstufe ist in der Fig. 3B mit tF2 bezeichnet. Vorzugsweise entspricht hierbei der Grenzwert dem Zeitpunkt t6. Eine Anforderung zu einer Rückschaltung zum Zeitpunkt t5A, wie in Fig. 3A dargestellt, würde somit dazu führen, daß das Abbruchkriterium gesetzt wird und die elektronische Getriebesteuerung den Rückschaltbefehl ausgibt. Statt über eine Zeitstufe läßt sich die Zulässigkeit des Abbruchkriteriums auch über die Getriebeeingangsdrehzahl nT bestimmen. Das Abbruchkriterium wird hier während der zweiten Phase nur dann gesetzt, wenn der aktuelle Getriebeeingangsdrehzahlwert noch nicht den Synchrondrehzahlwert der ersten Übersetzungsstufe i1 unterschritten hat. Dies entspricht in Fig. 3B dem Punkt C, d. h., ein Abbruch der Hochschaltung bei einer Getriebeeingangsdrehzahl unterhalb des Punktes C, wird nicht mehr zugelassen, da hier bereits eine für den Fahrer spürbare Reaktion des Automatgetriebes eintritt. Eine weitere Möglichkeit, die Zulässigkeit des Abbruchkriteriums zu bestimmen besteht darin, dies in Abhängigkeit des Druckniveaus pK2 der zweiten Kupplung vorzunehmen. Ist das Druckniveau der zweiten Kupplung pK2 kleiner als ein Grenzwert GW, so wird das Abbruchkriterium gesetzt. In der Praxis kann dieser Grenzwert z. B. so realisiert sein, daß ein hydraulischer Nachfolgeschieber der zweiten Kupplung die erste Kupplung abschaltet. Der Grenzwert GW ist in Fig. 3D entsprechend dargestellt.
Ab dem Punkt B1 oder G1 können, dem Fahrerwunsch entsprechend, z. B. weitere Rückschaltungen durchgeführt werden.

Die erfindungsgemäße Lösung bietet den Vorteil, daß für den zuvor beschriebenen Fall aus der Praxis der starre Ablauf von Hochschaltung, Sperrzeit und anschließender Rückschaltung unterbrochen wird. Unnötige Schaltungen, z. B. eine Hochschaltung vom vierten in den fünften Gang, gefolgt von einer Rückschaltung vom fünften in den vierten Gang, werden unterbunden. Das Verhalten des Automatgetriebes ist enger an den Leistungswunsch des Fahrers gekoppelt, d. h., das Automatgetriebe wirkt spontaner.

In Fig. 4, bestehend aus den Teil-Fig. 4A bis 4D, ist ein zweites Ausführungsbeispiel dargestellt. Diesem zweiten Ausführungsbeispiel liegt ein Steuerungsverfahren zur Lastübernahme bei einem Automatgetriebe zugrunde, wie es ebenfalls in der DE-A-42 40 621 offenbart ist. Bei diesem Steuerungsverfahren wird nur eine geringe Drehzahlüberhöhung der Getriebeeingangsdrehzahl nT eingestellt, z. B. kleiner als 10 Umdrehungen. In den Teil-Fig. 4B bis 4D sind zwei Beispiele dargestellt. Das erste Beispiel zeigt einen Schaltungsablauf gemäß dem Stand der Technik, als durchgezogene Linie ausgeführt. Das zweite Beispiel zeigt einen Schaltungsablauf gemäß der Erfindung, als gestrichelte Linie ausgeführt.

### Zum ersten Beispiel:

Der Schaltungsablauf gemäß dem Stand der Technik entspricht in Fig. 4B dem Kurvenzug mit den Punkten A, B und D. In Fig. 4C dem Kurvenzug mit den Punkten E, F, G und H. In Fig. 4D dem Kurvenzug mit den Punkten K, L, M, N und O.

Zu einem Zeitpunkt t0 gibt die elektronische Getriebesteuerung 13 einen Hochschaltbefehl aus. In Fig. 4A ändert sich dadurch der Signalverlauf SB von Eins nach Null. Zum Zeitpunkt t1 wird das Druckniveau der ersten Kupplung K1 von einem ersten Druckniveau auf ein zweites Druckniveau verringert. Dies entspricht in Fig. 4C den Punkten E und F. Danach folgt eine erste Druckrampe bis zum Zeitpunkt t4. Diese Druckrampe ist so gewählt, daß sich während des Verlaufes eine geringe Drehzahlüberhöhung der Getriebeeingangsdrehzahl nT einstellt. Dies geschieht zum Zeitpunkt t3 im Punkt A. Ebenfalls zum Zeitpunkt t1 wird die zweite Kupplung K2 bis zum Zeitpunkt t2 mit dem Schnellfülldruck, Druckniveau entsprechend dem Punkt K, beaufschlagt. Danach folgt für die zweite Kupplung K2 die Füllausgleichsphase bis zum Zeitpunkt t4. Die erste Phase der Überschneidungsschaltung entspricht hierbei dem Zeitraum t1 bis t4. Zum Zeitpunkt t4 beginnt für die zweite Kupplung K2 bis zum Zeitpunkt t8 eine erste und zweite Druckrampe, dies entspricht der Strecke Punkt L bis zum Punkt M, für die Übernahme der Last von der ersten Kupplung K1 und dem Punkt M bis N. Zeitgleich zum Zeitpunkt t4 beginnt für die erste Kupplung K1 eine zweite Druckrampe, während der das Druckniveau der ersten Kupplung K1 verringert wird. Endpunkt der Druckrampe ist hierbei der Punkt H. Üblicherweise sind die Steigungen der beiden Druckrampen, entsprechend der Strecke G, H bzw. L und M, gleich ausgeführt. Während des Zeitraums t4 bis t7 übernimmt die zweite Kupplung K2 die Last von der ersten Kupplung K1, so daß sich der Getriebeeingangsdrehzahl-Verlauf nT in Fig. 4B in Richtung des Synchronpunktes der zweiten Übersetzungsstufe i2 verändert. Sobald die zweite Kupplung die Last übernommen hat, dies ist etwa zum Zeitpunkt t6, wird die erste Kupplung K1 vollständig geöffnet. Die zweite Phase der Überschneidungsschaltung entspricht dem Zeitraum t4 bis t8. Zum Zeitpunkt t8 wird die zweite Kupplung K2 auf ein neues Druckniveau, entsprechend dem Punkt O, geführt. Zum Zeitpunkt t8 hat die Getriebeeingangsdrehzahl nT den Synchronpunkt D der zweiten Übersetzungsstufe i2 erreicht. Die Schaltung ist bei t9 beendet. Der Zeitraum t8 bis t9 entspricht der dritten Phase der Überschneidungsschaltung.

### Zum zweiten Beispiel:

Das zweite Beispiel zeigt einen Verlauf gemäß der Erfindung. In Fig. 4B entspricht dies dem Kurvenzug A, B und C. In Fig. 4C dem Kurvenzug mit den Punkten E, F, G, G1, G2 und H1. In Fig. 4D dem Kurvenzug mit den Punkten K, L, L1 und L2. Bei diesem Ausführungsbeispiel wird davon ausgegangen, daß der Rückschaltbefehl während der zweiten Phase erfolgt. Bis zum Zeitpunkt t4 erfolgen die Verläufe der Getriebeeingangsdrehzahl und die Druckverläufe der ersten und zweiten Kupplung, wie zuvor beschrieben. Zum Zeitpunkt t4A gibt die elektronische Getriebesteuerung 13 den Rückschaltbefehl aus. In Fig. 4A verändert sich dadurch der Signalpegel von Null nach Eins. Zum Zeitpunkt t5, also bereits im Bereich der eigentlichen Lastübernahme, wird die erste Kupplung K1 vom aktuellen Druckwert, dies entspricht dem Punkt G1, auf das ursprüngliche erste Druckniveau, entsprechend dem Punkt E bzw. G2, über eine Rampe erhöht. Zeitgleich wird die zweite Kupplung ebenfalls über eine Rampe vom Punkt L1 auf den Punkt L2 geführt. Dadurch ändert sich der Getriebeeingangsdrehzahl-Verlauf nT entsprechend dem ersten Übersetzungsverhältnis i1. Im Zeitpunkt t6, also mit Erreichen des Punktes G2, ist die Schaltung beendet. Dies bedeutet, daß danach unmittelbar weitere vom Fahrerwunsch abgeleitete Schaltungen ausgeführt werden können.

Die Anforderung zu einer Rückschaltung erfolgt während der zweiten Phase, also dem Zeitraum t4 bis t8. Das Abbruchkriterium wird gesetzt, da eine mit Beginn der zweiten Phase aktivierte Zeitstufe einen Grenzwert noch nicht überschritten hat. Diese Zeitstufe ist in der Fig. 4C mit tF2 bezeichnet. Vorzugsweise entspricht hierbei der Grenzwert dem Zeitpunkt t6. Statt über die Zeitstufe tF2 läßt sich die Zulässigkeit des Abbruchkriteriums auch über die Getriebeeingangsdrehzahl nT bestimmen. Das Abbruchkriterium wird hier während der zweiten Phase nur dann gesetzt, wenn der aktuelle Getriebeeingangsdrehzahlwert nT noch nicht den Synchrondrehzahlwert der ersten Übersetzungstufe i1 unterschritten hat. Dies entspricht in Fig. 4B dem Punkt B, d. h., ein Abbruch der Hochschaltung bei einer Getriebeeingangsdrehzahl nT unterhalb des Punktes B wird nicht mehr zugelassen, da hier bereits eine für den Fahrer spürbare Reaktion des Automatgetriebes eintritt. Eine weitere Möglichkeit, die Zulässigkeit des Abbruchkriteriums zu bestimmen besteht darin, dies in Abhängigkeit des Druckniveaus pK2 der zweiten Kupplung vorzunehmen. Ist das Druckniveau der zweiten Kupplung pK2 kleiner als ein Grenzwert GW, so wird das Abbruchkriterium gesetzt. In der Praxis kann dieser Grenzwert z. B. so realisiert sein, daß ein hydraulischer Nachfolgeschieber der zweiten Kupplung die erste Kupplung öffnet. Der Grenzwert GW ist in Fig. 4D entsprechend dargestellt.

Der Ausführungsform gemäß Fig. 3 und der Ausführungsform gemäß Fig. 4 ist gemeinsam, daß bei einem Wechsel von Schub nach Zug bzw. vice versa während der Hochschaltung das Abbruchkriterium erst nach Ablauf einer Sperrzeit gesetzt wird.

### Bezugszeichen

- 1: Antriebseinheit
- 2: Antriebswelle
- 3: hydrodynamischer Wandler
- 4: Pumpenrad
- 5: Turbinenrad
- 6: Leitrad
- 7: Wandlerkupplung
- 8: Turbinenwelle
- 9: Ravigneaux-Satz
- 10: Freilauf FL1
- 11: Planetenradsatz
- 12: Getriebeausgangswelle
- 13: elektronische Getriebesteuerung
- 14: Micro-Controller
- 15: Speicher
- 16: Funktionsblock Steuerung Stellglieder
- 17: Funktionsblock Berechnung
- 18: Getriebeeingangsdrehzahl-Signal
- 19: Getriebeausgangsdrehzahl-Signal
- 20: Eingangsgrößen
- 21: hydraulisches Steuergerät

## Patentansprüche

1. Verfahren zur Durchführung von Überschneidungsschaltungen bei einem Automatgetriebe, bei dem während einer Schaltung eine erste Kupplung (K1) öffnet und eine zweite Kupplung (K2) schließt, wobei die Überschneidungsschaltung aus drei Phasen besteht, während der ersten Phase über den Druckverlauf der ersten Kupplung (K1) der Verlauf einer Getriebeeingangsdrehzahl (nT) bestimmt wird, während der zweiten Phase die zweite Kupplung (K2) die Last von der ersten Kupplung (K1) übernimmt und während der dritten Phase die zweite Kupplung (K2) vollständig geschlossen wird, und bei dem bei Erkennen eines Abbruchkriteriums, das einer von einem Fahrer vorgebbaren Rückschaltanforderung entspricht, eine Hochschaltung von einer ersten (i1) in eine zweite Übersetzungsstufe (i2) abgebrochen und in die erste Übersetzungsstufe (i1) zurückgekehrt wird, **dadurch gekennzeichnet, daß** zur Erhöhung der Spontanität des Automatgetriebes die Hochschaltung ohne zeitliche Verzögerung eingeleitet wird und die eingeleitete Hochschaltung verzögerungsfrei abgebrochen und verzögerungsfrei in die erste Übersetzung (i1) zurückgekehrt wird, wenn das Abbruchkriterium vor Beginn der dritten Phase der Überschneidungsschaltung vorliegt.

2. Verfahren nach Anspruch 1, **dadurch gekennzeichnet, daß** das Abbruchkriterium während der zweiten Phase nur dann gesetzt wird, wenn eine mit Beginn der zweiten Phase aktivierte Zeitstufe (tF2) einen Grenzwert (GW) noch nicht überschritten hat (tF2 < GW).

3. Verfahren nach Anspruch 1, **dadurch gekennzeichnet, daß** das Abbruchkriterium während der zweiten Phase nur dann gesetzt wird, wenn der aktuelle Getriebeeingangsdrehzahlwert (nT(t)) noch nicht die Synchrondrehzahl (nT(i1)) der ersten Übersetzungsstufe (i1) unterschritten hat (nT < nT(i1)).

4. Verfahren nach Anspruch 1, **dadurch gekennzeichnet, daß** das Abbruchkriterium während der zweiten Phase nur dann gesetzt wird, wenn das Druckniveau der zweiten Kupplung (pK2) einen Grenzwert (GW) noch nicht überschritten hat (pK2 < GW).

5. Verfahren nach einem der vorausgegangenen Ansprüche, **dadurch gekennzeichnet, daß** bei Erfülltsein des Abbruchkriteriums das Druckniveau der ersten Kupplung (K1) vom aktuellen Druckniveau über eine Rampenfunktion erhöht wird und zugleich das Druckniveau der zweiten Kupplung (K2) über eine Rampenfunktion vom aktuellen Druckniveau auf Null reduziert wird.

6. Verfahren nach Anspruch 5, **dadurch gekennzeichnet, daß** bei einem Wechsel von Schub nach Zug bzw. vice versa während der Schaltung das Abbruchkriterium erst nach Ablauf einer Zeitstufe gesetzt wird.

## Claims

1. Method of overlapping gearshifts of an automatic transmission, in which during a gearshift a first clutch (K1) opens and a second clutch (K2) closes, whereby the overlapping gearshift consists of three phases - the course of a transmission input speed (nT) being determined by the pressure course of the first clutch in the first phase; the second clutch (K2) taking over the load from the first clutch (K1) in the second phase; the second clutch (K2) being completely closed in the third phase - and whereby upon recognition of an abortion criterion, which corresponds to a driver-selectable downshift request, upshifting from a first (i1) to a second reduction stage (i2) is aborted and return to the first reduction stage (i1) is effected,
**characterized**
**in that** for increased spontaneity of the automatic transmission, the upshift is initiated without delay and abortion and return to the first reduction stage (i1) are also effected without delay if the abortion criterion is present prior to the start of the third phase of the overlapping gearshift.

2. Method according to claim 1,
**characterized**
**in that** during the second phase the abortion criterion is only set if a period (tF2) activated at the onset of the second phase has not yet exceeded a limit value (GW) (tF2 < GW).

3. Method according to claim 1,
**characterized**
**in that** during the second phase the abortion criterion is only set if the current transmission input speed value (nT (t) ) has not yet fallen below the synchronous speed (nT (i1)) of the first reduction stage (i1) (nT < nT (i1).

4. claim 1,
**characterized**
**in that** during the second phase the abortion criterion is only set if the pressure level of the second clutch (pK2) has not yet exceeded a limit value (GW) (pK2 < GW).

5. Method according to one of the preceding claims
**characterized**
**in that** with the abortion criterion given, the pressure level of the first clutch (K1) is raised by the current pressure level via a ramp function while at the same time the pressure level of the second clutch (K2) is reduced from the current pressure level to zero via a ramp function.

6. Method according to claim 5,
**characterized**
**in that** upon changeover from coasting to traction or vice versa during a gearshift, the abortion criterion will only be set after expiry of a period of time.

## Revendications

1. Procédé pour l'exécution de changements de rapport en montée à intersection dans une boîte de vitesses automatique dans lequel, pendant un changement de rapport, un premier embrayage (K1) se desserre et un deuxième embrayage (K2) se serre, le changement de rapport à intersection étant composé de trois phases où, pendant la première phase, la variation de la vitesse de rotation d'entrée de la boîte de vitesses (nT) est déterminée par le niveau de la pression du premier embrayage (K1), pendant la deuxième phase, le deuxième embrayage (K2) prend la charge du premier embrayage (K1) et, pendant la troisième phase, le deuxième embrayage (K2) est entièrement serré et, dans lequel, lors de la détection d'un critère d'interruption, qui correspond à une demande de rétrogradation pouvant être imposée par un conducteur, un changement en montée passant d'un premier étage de rapport de transmission (i1) à un deuxième étage de rapport de transmission (i2) est interrompu et l'on revient au premier étage de rapport de transmission (i1), c a r a c t é r i s é en ce que, pour l'amélioration de la spontanéité de la boîte de vitesses automatique, le changement de rapport en montée est lancé sans retard de temps et le changement de rapport en montée lancé est interrompu sans retard et l'on revient sans retard au premier rapport de transmission (i1) lorsque le critère d'interruption est présent avant le début de la troisième phase du changement de rapport à intersection.

2. Procédé selon la revendication 1, **caractérisé en ce que** le critère d'interruption n'est mis pendant la deuxième phase que lorsqu'un étage de temps (tF2) activé avec le début de la deuxième phase n'est pas encore devenu supérieur à une valeur limite (GW), (tF2 < GW).

3. Procédé selon la revendication 1, **caractérisé en ce que** le critère d'interruption n'est mis pendant la deuxième phase que si la valeur actuelle de la vitesse de rotation d'entrée de la boîte de vitesses (nT (t)) n'est pas encore tombée au-dessous de la vitesse synchrone (nT (i1)) du premier étage de rapport de transmission (i1), (nT < nT (i1)).

4. Procédé selon la revendication 1, **caractérisé en ce que** le critère d'interruption n'est mis pendant la deuxième phase que lorsque le niveau de pression du deuxième embrayage (pK2) n'est pas encore devenu supérieur à une valeur limite (GW), (pK2< GW).

5. Procédé selon l'une des revendications précédentes, **caractérisé en ce que**, lorsque le critère d'interruption est satisfait, le niveau de pression du premier embrayage (K1) est élevé à partir du niveau de pression actuel en suivant une fonction rampe et, en même temps, le niveau de pression du deuxième embrayage (K2) est ramené du niveau de pression actuel à zéro en suivant une fonction rampe.

6. Procédé selon la revendication 5, **caractérisé en ce que**, lors d'un passage de la poussée à la traction, ou inversement pendant le changement de rapport, le critère d'interruption n'est mis qu'après l'écoulement d'un étage de temps.
